# EUROPÄISCHE PATENTANMELDUNG

(11) **EP 3 735 884 A1**
(43) Veröffentlichungstag der Anmeldung: **11.11.2020**
(21) Anmeldenummer: 19382358.0
(22) Anmeldetag: 09.05.2019
(51) Int. Cl.: A47J 45/06, A47J 36/32, A47J 45/07, H05B 6/12

(54) **GARSYSTEM**

(71) Anmelder: BSH Electrodomésticos España, S.A., 50016 Zaragoza (ES); BSH Hausgeräte GmbH, 81739 München (DE)
(72) Erfinder: Camañes Vera, Victor, 50003 Zaragoza (ES); Mir Bel, Jorge, 50019 Zaragoza (ES); Parra Borderías, Maria, 50006 Zaragoza (ES); Valeau Martin, David, 50009 Zaragoza (ES)

(57) **Zusammenfassung**

Die Erfindung geht aus von einem Garsystem (10a), insbesondere von einem Induktionsgarsystem, mit zumindest einem Gargeschirrhandgriff (12a), welcher zumindest eine Handgriffschnittstelle (14a) aufweist, die zu einer lösbaren mechanischen Verbindung mit zumindest einer Gargeschirrschnittstelle (16a) zumindest eines Gargeschirrs (18a) vorgesehen ist.

Um ein gattungsgemäßes System mit verbesserten Eigenschaften hinsichtlich einer Konstruktion bereitzustellen, wird vorgeschlagen, dass die Handgriffschnittstelle (14a) zumindest eine elektrische Verbindungsschnittstelle (20a) aufweist, welche bei der Herstellung der mechanischen Verbindung zu einer elektrischen Kopplung mit zumindest einer elektrischen Verbindungsschnittstelle (22a) der Gargeschirrschnittstelle (16a) vorgesehen ist.

## Beschreibung

Die Erfindung betrifft ein Garsystem nach dem Oberbegriff des Anspruchs 1 und ein Verfahren zu einem Betrieb eines Garsystems nach dem Oberbegriff des Anspruchs 13.

Aus dem Stand der Technik ist bereits ein als Kochsystem ausgebildetes Garsystem bekannt, welches ein Gargeschirr und einen Gargeschirrhandgriff aufweist. Der Gargeschirrhandgriff weist eine Handgriffschnittstelle auf. In einem montierten Zustand ist die Handgriffschnittstelle mittels einer lösbaren mechanischen Verbindung mit einer Gargeschirrschnittstelle des Gargeschirrs verbunden. Die Handgriffschnittstelle und die Gargeschirrschnittstelle wirken zu einer Herstellung der lösbaren mechanischen Verbindung zusammen. Der Gargeschirrhandgriff weist mehrere elektrische Komponenten, wie beispielsweise eine Sensoreinheit und eine Auswerteeinheit und eine Kommunikationseinheit, auf. In einem Betriebszustand kommuniziert der Gargeschirrhandgriff mittels der Kommunikationseinheit mit einer Steuereinheit eines als Kochfeld ausgebildeten Gargeräts. Eine elektrische Verbindung mit elektrischen Gargeschirrkomponenten des Gargeschirrs erfolgt über eine separate Schnittstelle.

Die Aufgabe der Erfindung besteht insbesondere darin, ein gattungsgemäßes System mit verbesserten Eigenschaften hinsichtlich einer Konstruktion bereitzustellen. Die Aufgabe wird erfindungsgemäß durch die Merkmale der Ansprüche 1 und 13 gelöst, während vorteilhafte Ausgestaltungen und Weiterbildungen der Erfindung den Unteransprüchen entnommen werden können.

Die Erfindung geht aus von einem Garsystem, insbesondere von einem Induktionsgarsystem, vorteilhaft von einem Kochsystem und vorzugsweise von einem Induktionskochsystem, insbesondere mit zumindest einem Gargeschirr, welches insbesondere zumindest eine Gargeschirrschnittstelle aufweist, und mit zumindest einem Gargeschirrhandgriff, welcher zumindest eine Handgriffschnittstelle aufweist, die zu einer lösbaren mechanischen Verbindung mit zumindest einer Gargeschirrschnittstelle zumindest eines Gargeschirrs, insbesondere mit der Gargeschirrschnittstelle des Gargeschirrs, vorgesehen ist.

Es wird vorgeschlagen, dass die Handgriffschnittstelle zumindest eine elektrische Verbindungsschnittstelle aufweist, welche bei der Herstellung der mechanischen Verbindung zu einer elektrischen Kopplung mit zumindest einer elektrischen Verbindungsschnittstelle der Gargeschirrschnittstelle vorgesehen ist.

Durch eine derartige Ausgestaltung kann insbesondere eine optimierte Konstruktion erreicht werden. Es kann insbesondere eine einfache und/oder schnelle Montage und/oder Demontage erzielt werden, da insbesondere auf eine Herstellung einer separaten elektrischen Verbindung zusätzlich zu der mechanischen Verbindung verzichtet werden kann.

Insbesondere durch die Lösbarkeit der mechanischen Verbindung, kann vorteilhaft eine einfache Reinigbarkeit und/oder Lagerbarkeit erzielt werden, da insbesondere der Gargeschirrhandgriff und das Gargeschirr jeweils separat voneinander gereinigt und/oder gelagert werden können. Es kann, insbesondere durch die Lösbarkeit der mechanischen Verbindung, insbesondere eine hohe Flexibilität erzielt werden, da beispielsweise im Fall eines Defekts des Gargeschirrs dieses insbesondere in einfacher Weise durch zumindest ein weiteres Gargeschirr ersetzt werden kann. Der Gargeschirrhandgriff, insbesondere zusätzlich zu einer Kopplung mit der Gargeschirrschnittstelle des Gargeschirrs, ist insbesondere zu einer Kopplung mit zumindest einer weiteren Gargeschirrschnittstelle zumindest eines weiteren Gargeschirrs vorgesehen, welches insbesondere Teil des Garsystems sein könnte. Hierdurch können einem Bediener insbesondere Kosten erspart werden, wodurch insbesondere eine hohe Zufriedenheit bei dem Bediener ermöglicht werden kann. Insbesondere durch die Lösbarkeit der mechanischen Verbindung, können insbesondere geringe Kosten, insbesondere bei einer Herstellung und/oder bei einem Transport und/oder bei einer Verpackung, erreicht werden.

Unter einem "Garsystem" soll insbesondere ein System verstanden werden, welches zumindest ein Gargeräteobjekt und/oder zumindest ein Gargerät und/oder zumindest ein Gargerätezubehörobjekt aufweist, und welches, insbesondere zusätzlich, insbesondere zumindest ein Küchenobjekt und/oder zumindest eine weitere Baueinheit aufweisen könnte, das/die insbesondere von einem Gargeräteobjekt und/oder von einem Gargerät und/oder von einem Gargerätezubehörobjekt verschieden ausgebildet ist. Unter einem "Gargeräteobjekt" soll insbesondere zumindest ein Teil, insbesondere eine Unterbaugruppe, eines Gargeräts, insbesondere eines Induktionsgargeräts, verstanden werden. Unter einem "Gargerätezubehörobjekt" soll insbesondere ein Objekt verstanden werden, welches insbesondere zu einem Gebrauch und/oder zu einer Verwendung mit einem Gargerät vorgesehen ist und/oder welches insbesondere als ein Zubehör für ein Gargerät ausgebildet ist. Unter einem "Küchenobjekt" soll insbesondere ein Objekt verstanden werden, welches zu einem Gebrauch und/oder zu einer Verwendung und/oder zu einer Anordnung in einer Küche vorgesehen ist, und zwar insbesondere zu einer Bearbeitung und/oder Behandlung und/oder Aufbewahrung zumindest eines Lebensmittels. Zumindest ein Gargerät könnte beispielsweise ein Ofen, insbesondere ein Backofen und/oder ein Herd, und/oder ein Kochfeld und/oder eine Mikrowelle und/oder ein Grillgerät und/oder ein Dampfgargerät sein.

Beispielsweise könnte das Garsystem zumindest ein Gargeräteobjekt aufweisen, welches insbesondere eine Unterbaugruppe eines Gargeräts sein könnte. Zumindest ein Gargeräteobjekt könnte beispielsweise zumindest eine Geräte-Steuereinheit und/oder zumindest eine Geräte-Bedienerschnittstelle und/oder zumindest eine Gargeräte-Gehäuseeinheit und/oder zumindest eine Gargeräte-Heizeinheit und/oder zumindest einen Wechselrichter und/oder zumindest eine Geräteplatte, welche insbesondere eine als Kochfeldplatte ausgebildete Aufstellplatte sein könnte, und/oder zumindest eine Abzugseinheit und/oder zumindest eine Gargeräteelektronik aufweisen. Insbesondere alternativ oder zusätzlich, insbesondere zu dem Gargeräteobjekt, könnte das Garsystem beispielsweise zumindest ein Gargerät und insbesondere zusätzlich zu dem Gargerät zumindest eine weitere Baueinheit aufweisen, wie insbesondere zumindest eine Geräteplatte, welche insbesondere eine als Arbeitsplatte ausgebildete Aufstellplatte sein könnte.

Beispielsweise könnte zumindest ein Gargerätezubehörobjekt zumindest eine externe Sensoreinheit zur externen Messung einer Temperatur eines Gargeschirrs und/oder eines Garguts aufweisen. Zumindest ein Gargerätezubehörobjekt könnte, insbesondere alternativ oder zusätzlich, beispielsweise ein Gargeschirr und/oder eine Aufstelleinheit und/oder ein Kontaktmodul sein, welches insbesondere zu einer Anordnung an dem Gargeschirr und/oder an der Aufstelleinheit vorgesehen sein könnte. Insbesondere könnte zumindest ein Gargerätezubehörobjekt, insbesondere alternativ oder zusätzlich, ein Adapter sein, welcher insbesondere zu einer Kopplung mit zumindest einem Küchenobjekt und insbesondere zu einem Aufstellen und/oder Auflegen auf der Gargeräteplatte vorgesehen sein könnte. Vorteilhaft könnte zumindest ein Gargerätezubehörobjekt zumindest einen und insbesondere zumindest den Gargeschirrhandgriff aufweisen.

Zumindest ein Küchenobjekt könnte beispielsweise eine Küchenmaschine und/oder eine Unterbaugruppe einer Küchenmaschine, insbesondere einen Küchenmaschinenbehälter, aufweisen. Insbesondere alternativ oder zusätzlich, könnte zumindest ein Küchenobjekt insbesondere zumindest ein Reinigungsgerät und/oder zumindest ein Kältegerät aufweisen. Zumindest eine weitere Baueinheit könnte beispielsweise ein Mobilgerät und/oder eine Recheneinheit, wie beispielsweise einen Computer, aufweisen.

Das Garsystem weist insbesondere zumindest ein und vorteilhaft zumindest das Gargeschirr auf. Insbesondere definiert das Gargeschirr zumindest einen Lebensmittelaufnahmeraum wenigstens teilweise und vorteilhaft wenigstens zu einem Großteil. Beispielsweise könnte das Gargeschirr zu einem Einbringen in zumindest einen Garraum vorgesehen sein, wie beispielsweise in zumindest einen Garraum eines als Ofen ausgebildeten Gargeräts. Insbesondere alternativ oder zusätzlich könnte das Gargeschirr insbesondere zu einem Aufstellen auf zumindest einer Aufstellplatte vorgesehen sein. Das Garsystem könnte insbesondere die Aufstellplatte aufweisen, welche insbesondere Teil eines als Kochfeld ausgebildeten Gargeräts sein könnte.

Unter "wenigstens zu einem Großteil" soll insbesondere zu einem Anteil, insbesondere einem Massenanteil und/oder einem Volumenanteil und/oder einem Anteil einer Anzahl, von mindestens 70 %, insbesondere von mindestens 80 %, vorteilhaft von mindestens 90 % und vorzugsweise von mindestens 95 % verstanden werden.

Unter einem "Gargeschirrhandgriff" soll insbesondere eine Einheit verstanden werden, welche zu einer Anordnung an dem Gargeschirr und vorteilhaft zu einer Befestigung an dem Gargeschirr vorgesehen ist und welche, insbesondere in zumindest einer mit dem Gargeschirr verbundenen Position, insbesondere zu einer Betätigung durch einen Bediener, insbesondere zum Zweck einer Bewegung und/oder Handhabung des Gargeschirrs, vorgesehen ist. Der Gargeschirrhandgriff definiert insbesondere zumindest eine Grifffläche, welche insbesondere zu einem Kontakt und/oder zu einer Berührung durch den Bediener, insbesondere zum Zweck einer Bewegung und/oder Handhabung des Gargeschirrs, vorgesehen ist.

Insbesondere weist der Gargeschirrhandgriff zumindest eine Handgriffgehäuseeinheit auf, welche insbesondere als eine Außengehäuseeinheit ausgebildet ist und welche insbesondere die Grifffläche wenigstens zu einem Großteil und vorteilhaft vollständig definiert. Die Grifffläche ist insbesondere durch zumindest eine Oberfläche der Handgriffgehäuseeinheit definiert und/oder gebildet. Unter einer "Handgriffgehäuseeinheit" soll insbesondere eine Einheit, insbesondere eine Gehäuseeinheit des Gargeschirrhandgriffs, verstanden werden, welche insbesondere zumindest einen, insbesondere als Hohlraum ausgebildeten, Aufnahmeraum, insbesondere zu einer Aufnahme und/oder zu einer Lagerung wenigstens eines Bauteils und/oder wenigstens einer Baueinheit, wenigstens teilweise, vorteilhaft wenigstens zu einem Großteil und besonders vorteilhaft vollständig begrenzt und/oder definiert. Das Bauteil und/oder die Baueinheit könnte beispielsweise zumindest eine Auswerteeinheit und/oder zumindest eine Steuereinheit und/oder zumindest eine Versorgungseinheit und/oder zumindest eine Bedienerschnittstelle und/oder eine Handgriffelektronik und/oder einen Antriebsmotor und/oder einen Energiespeicher aufweisen.

Unter einer "Handgriffschnittstelle" soll insbesondere eine Schnittstelle des Gargeschirrhandgriffs verstanden werden, welche insbesondere in wenigstens einem montierten Zustand die lösbare mechanische Verbindung wenigstens teilweise herstellt und welche insbesondere zu einer Kopplung mit der Gargeschirrschnittstelle des Gargeschirrs vorgesehen ist. Insbesondere sind die Handgriffschnittstelle und die Gargeschirrschnittstelle in wenigstens einem montierten Zustand miteinander gekoppelt und stellen insbesondere in dem montierten Zustand die lösbare mechanische Verbindung wenigstens zu einem Großteil und vorteilhaft vollständig her.

Unter einer "Gargeschirrschnittstelle" soll insbesondere eine Schnittstelle des Gargeschirrs verstanden werden, welche insbesondere in wenigstens einem montierten Zustand die lösbare mechanische Verbindung wenigstens teilweise herstellt und welche insbesondere zu einer Kopplung mit der Handgriffschnittstelle des Gargeschirrhandgriffs vorgesehen ist.

Unter der Wendung, dass eine Schnittstelle die lösbare mechanische Verbindung "wenigstens teilweise" herstellt, soll insbesondere verstanden werden, dass die Schnittstelle die lösbare mechanische Verbindung alleine und/oder gemeinsam mit zumindest einer weiteren Schnittstelle herstellt.

Unter einer "lösbaren" Verbindung soll insbesondere eine Verbindung verstanden werden, welche insbesondere reversibel herstellbar und/oder trennbar ist, und zwar insbesondere unter Vermeidung einer Beschädigung von an der Verbindung beteiligter Einheiten und/oder Schnittstellen. Beispielsweise könnte die Verbindung mittels Werkzeug, insbesondere reversibel, lösbar sein. Die Verbindung könnte beispielsweise werkzeuglos, insbesondere reversibel, lösbar sein.

Unter einer "elektrischen Verbindungsschnittstelle" soll insbesondere eine Schnittstelle verstanden werden, welche, insbesondere bei der Herstellung der mechanischen Verbindung, zu einer Herstellung zumindest einer elektrischen Verbindung und/oder zumindest einer elektrischen Kontaktierung mit zumindest einer weiteren Schnittstelle vorgesehen ist. Insbesondere sind die Schnittstelle und die weitere Schnittstelle korrespondierend zueinander ausgebildet und insbesondere speziell füreinander vorgesehen.

Insbesondere stellt die elektrische Verbindungsschnittstelle, insbesondere der Handgriffschnittstelle und/oder der Gargeschirrschnittstelle, in wenigstens einem montierten Zustand zumindest einen elektrischen Kontakt, insbesondere zwischen zumindest einer in dem Gargeschirrhandgriff angeordneten elektrischen Einheit und zumindest einer in dem Gargeschirr angeordneten elektrischen Einheit, wenigstens teilweise her. Unter der Wendung, dass eine elektrische Verbindungsschnittstelle zumindest einen elektrischen Kontakt "wenigstens teilweise" herstellt, soll insbesondere verstanden werden, dass die elektrische Verbindungsschnittstelle den elektrischen Kontakt alleine und/oder gemeinsam mit zumindest einer weiteren elektrischen Verbindungsschnittstelle herstellt. In wenigstens einem montierten Zustand stellen die elektrische Verbindungsschnittstelle der Handgriffschnittstelle und die elektrische Verbindungsschnittstelle der Gargeschirrschnittstelle, insbesondere gemeinsam, die elektrische Verbindung und/oder die elektrische Kopplung her.

Das Gargeschirr weist insbesondere zumindest eine Gargeschirrgehäuseeinheit und insbesondere zumindest eine elektrische Einheit auf, welche insbesondere zumindest an der Gargeschirrgehäuseeinheit angeordnet und vorteilhaft wenigstens zu einem Großteil in der Gargeschirrgehäuseeinheit integriert ist. Die elektrische Einheit des Gargeschirrs könnte beispielsweise eine elektrische Gargeschirrfunktionseinheit sein, wie beispielsweise eine Sensoreinheit und/oder ein Heizelement und/oder eine Steuereinheit und/oder eine Auswerteeinheit. Insbesondere ist die elektrische Verbindungsschnittstelle der Handgriffschnittstelle in wenigstens einem Betriebszustand zu einer elektrischen Versorgung zumindest der elektrischen Einheit des Gargeschirrs und/oder zumindest einer Gargeschirrfunktionseinheit des Gargeschirrs vorgesehen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die elektrische Verbindungsschnittstelle der Handgriffschnittstelle zumindest ein beweglich gelagertes Kontaktelement aufweist, welches zu einer Kontaktierung zumindest eines Kontaktelements der elektrischen Verbindungsschnittstelle der Gargeschirrschnittstelle vorgesehen ist. Unter einem "Kontaktelement" soll insbesondere ein Element verstanden werden, welches wenigstens teilweise zu einer Herstellung einer elektrischen Kontaktierung vorgesehen ist. Unter der Wendung, dass ein Kontaktelement "wenigstens teilweise" zu einer Herstellung einer elektrischen Kontaktierung vorgesehen ist, soll insbesondere verstanden werden, dass das Kontaktelement alleine und/oder gemeinsam mit zumindest einem weiteren Kontaktelement zu der Herstellung der elektrischen Kontaktierung vorgesehen ist. Insbesondere stellen das Kontaktelement der elektrischen Verbindungsschnittstelle der Handgriffschnittstelle und das Kontaktelement der elektrischen Verbindungsschnittstelle der Gargeschirrschnittstelle in wenigstens einem montierten Zustand die elektrische Kontaktierung wenigstens zu einem Großteil und vorteilhaft vollständig her. Das Kontaktelement der elektrischen Verbindungsschnittstelle der Handgriffschnittstelle ist insbesondere beweglich relativ zu der Hangriffgehäuseeinheit gelagert. Beispielsweise könnte das Kontaktelement der elektrischen Verbindungsschnittstelle der Handgriffschnittstelle translatorisch und/oder rotatorisch, insbesondere relativ zu der Hangriffgehäuseeinheit, gelagert sein. Insbesondere ist das Kontaktelement durch zumindest einen Teilbereich der Handgriffschnittstelle definiert und/oder gebildet. Die Handgriffschnittstelle weist insbesondere zumindest einen Teilbereich auf, welcher insbesondere das Kontaktelement wenigstens teilweise, insbesondere wenigstens zu einem Großteil und vorteilhaft vollständig definiert und/oder ausbildet. Dadurch kann insbesondere ein optimaler elektrischer Kontakt auf konstruktiv einfache Weise hergestellt werden, wodurch insbesondere eine optimale Funktionalität gewährleistet und insbesondere Fehler aufgrund eines fehlerhaften elektrischen Kontakts ausgeschlossen werden können.

Beispielsweise könnte das Gargeschirr zumindest ein Rahmenelement aufweisen, welches insbesondere die elektrische Verbindungsschnittstelle der Gargeschirrschnittstelle in zumindest einer Ebene wenigstens abschnittweise umrahmen könnte. Vorzugsweise weist der Gargeschirrhandgriff zumindest ein Rahmenelement auf, welches die elektrische Verbindungsschnittstelle der Handgriffschnittstelle in zumindest einer Ebene wenigstens abschnittweise umrahmt. Das Rahmenelement umrahmt in der Ebene insbesondere zumindest einen Abschnitt der elektrischen Verbindungsschnittstelle der Handgriffschnittstelle. Insbesondere umrahmt das Rahmenelement die elektrische Verbindungsschnittstelle der Handgriffschnittstelle in der Ebene bezüglich zumindest eines Mittelpunkts und/oder Schwerpunkts der elektrischen Verbindungsschnittstelle der Handgriffschnittstelle in der Ebene über einen Winkelbereich von mindestens 90 °, insbesondere von mindestens 180°, vorteilhaft von mindestens 270 °, besonders vorteilhaft von mindestens 300 °, vorzugsweise von mindestens 330 ° und besonders bevorzugt von mindestens 350 °. Die Ebene ist insbesondere wenigstens im Wesentlichen parallel zu zumindest einem Oberflächenabschnitt des Gargeschirrhandgriffs, insbesondere der Handgriffgehäuseeinheit, ausgerichtet und/oder insbesondere als tangential zu zumindest einem Oberflächenabschnitt des Gargeschirrhandgriffs, insbesondere der Handgriffgehäuseeinheit, ausgerichtet. Dadurch kann insbesondere die elektrische Verbindungsschnittstelle der Handgriffschnittstelle geschützt angeordnet werden, und zwar insbesondere mit konstruktiv einfachen Mitteln.

Weiterhin wird vorgeschlagen, dass die Handgriffschnittstelle zumindest ein mechanisches Verbindungselement aufweist, welches an dem Rahmenelement angeordnet ist. Unter einem mechanischen "Verbindungselement" soll insbesondere ein Element verstanden werden, welches in wenigstens einem montierten Zustand die mechanische Verbindung wenigstens teilweise herstellt. Unter der Wendung, dass ein mechanisches Verbindungselement die mechanische Verbindung "wenigstens teilweise" herstellt, soll insbesondere verstanden werden, dass das mechanische Verbindungselement die mechanische Verbindung alleine und/oder gemeinsam mit zumindest einem korrespondierenden und/oder weiteren mechanischen Verbindungselement herstellt. Das mechanische Verbindungselement könnte beispielsweise auf einer der elektrischen Verbindungsschnittstelle der Handgriffschnittstelle abgewandten Seite des Rahmenelements an dem Rahmenelement angeordnet sein. Insbesondere könnte das mechanische Verbindungselement auf einer der elektrischen Verbindungsschnittstelle der Handgriffschnittstelle zugewandten Seite des Rahmenelements an dem Rahmenelement angeordnet sein. Dadurch kann insbesondere eine optimale Anordnung und/oder Position des mechanischen Verbindungselements erzielt werden, da das insbesondere mechanische Verbindungselement insbesondere an einer einfach zugänglichen Stelle angeordnet werden kann, wodurch eine einfache und/oder schnelle Herstellung und/oder Trennung der mechanischen Verbindung ermöglicht werden kann.

Das mechanische Verbindungselement könnte die mechanische Verbindung beispielsweise durch Klemmung und/oder durch Verschraubung und/oder durch Verrastung wenigstens teilweise herstellen. Insbesondere könnte das mechanische Verbindungselement als ein Klemmelement und/oder als ein Schraubelement und/oder als ein Rastelement ausgebildet sein. Vorzugsweise weist die Handgriffschnittstelle zumindest ein mechanisches Verbindungselement, insbesondere zumindest das mechanische Verbindungselement, auf, welches als Rastelement ausgebildet ist und zu der mechanischen Verbindung mit zumindest einem Rastelement der Gargeschirrschnittstelle vorgesehen ist. Insbesondere sind das Rastelement der Handgriffschnittstelle und das Rastelement der Gargeschirrschnittstelle korrespondierend zueinander ausgebildet und insbesondere speziell füreinander vorgesehen. Beispielsweise könnte das Rastelement der Handgriffschnittstelle zumindest einen Hinterschnitt und das Rastelement der Gargeschirrschnittstelle zumindest einen Rasthaken aufweisen, welcher insbesondere wenigstens teilweise beweglich gelagert sein könnte und welcher insbesondere in wenigstens einem montieren Zustand in das Rastelement der Handgriffschnittstelle eingreifen könnte. Das Rastelement der Gargeschirrschnittstelle könnte beispielsweise zumindest einen Hinterschnitt und das Rastelement der Handgriffschnittstelle zumindest einen Rasthaken aufweisen, welcher insbesondere wenigstens teilweise beweglich gelagert sein könnte und welcher insbesondere in wenigstens einem montieren Zustand in das Rastelement der Gargeschirrschnittstelle eingreifen könnte. Dadurch kann die mechanische Verbindung insbesondere besonders einfach und/oder schnell hergestellt und/oder getrennt werden. Insbesondere kann in wenigstens einem montierten Zustand eine stabile mechanische Verbindung bereitgestellt werden.

Weiterhin wird vorgeschlagen, dass der Gargeschirrhandgriff zumindest eine Handgriffelektronik aufweist, welche dazu vorgesehen ist, in wenigstens einem Betriebszustand mittels der elektrischen Verbindungsschnittstelle der Handgriffschnittstelle mit zumindest einer Gargeschirrfunktionseinheit, insbesondere elektrisch und/oder elektronisch, verbunden zu sein, welche zumindest an dem Gargeschirr angeordnet ist. Insbesondere ist die Handgriffelektronik in wenigstens einem Betriebszustand mittels der elektrischen Verbindungsschnittstelle der Handgriffschnittstelle mit der Gargeschirrfunktionseinheit verbunden. Die Gargeschirrfunktionseinheit ist insbesondere zumindest an dem Gargeschirr, insbesondere in der Gargeschirrgehäuseeinheit, angeordnet und vorteilhaft in dem Gargeschirr, insbesondere in der Gargeschirrgehäuseeinheit, integriert. Die Gargeschirrfunktionseinheit könnte beispielsweise zumindest eine Sensoreinheit und/oder zumindest ein Heizelement und/oder zumindest eine Steuereinheit und/oder zumindest eine Auswerteeinheit aufweisen und insbesondere als solche ausgebildet sein. Unter einer "Handgriffelektronik" soll insbesondere eine elektrische und/oder elektronische Einheit verstanden werden, welche insbesondere zu einer Verarbeitung und/oder Weiterleitung zumindest eines elektrischen und/oder elektronischen Signals vorgesehen ist. Beispielsweise könnte die Handgriffelektronik zumindest eine Recheneinheit und, insbesondere zusätzlich zu der Recheneinheit, insbesondere zumindest eine Speichereinheit aufweisen, in welcher insbesondere zumindest ein Steuer- und/oder Regelprogramm gespeichert sein könnte, das insbesondere zu einer Ausführung durch die Recheneinheit vorgesehen sein könnte. Insbesondere ist die Handgriffelektronik wenigstens zu einem Großteil und vorteilhaft vollständig in der Handgriffgehäuseeinheit integriert. Dadurch kann insbesondere eine besonders vorteilhafte Ausgestaltung erzielt werden. Insbesondere durch die Handgriffelektronik, kann insbesondere ein hoher Bedienkomfort erzielt werden. Insbesondere kann die Handgriffelektronik gut zugänglich angeordnet werden, wodurch insbesondere ein hoher Bedienkomfort erreicht werden kann. Die elektrische Verbindung der Handgriffelektronik und der Gargeschirrfunktionseinheit kann insbesondere konstruktiv einfach und/oder schnell hergestellt und/oder getrennt werden.

Beispielsweise könnte die Handgriffelektronik zu einer Steuerung und/oder Regelung der Gargeschirrfunktionseinheit vorgesehen sein. Vorzugsweise ist die Handgriffelektronik zu einer Auswertung zumindest einer von der Gargeschirrfunktionseinheit übermittelten Kenngröße vorgesehen. Die Handgriffelektronik weist insbesondere zumindest eine Auswerteeinheit auf und ist insbesondere als Auswerteeinheit ausgebildet. Insbesondere könnte die Gargeschirrfunktionseinheit zumindest eine Sensoreinheit aufweisen, welche insbesondere zu einer Detektion zumindest eines Sensorparameters vorgesehen sein könnte. Die Kenngröße könnte insbesondere zumindest ein den Sensorparameter kennzeichnender Parameter sein. Dadurch kann insbesondere auf eine zusätzliche Auswerteeinheit und/oder auf eine Übertragung der Kenngröße an zumindest eine Geräte-Steuereinheit, insbesondere zum Zweck einer Auswertung der Kenngröße, verzichtet werden. Insbesondere kann eine kompakte und/oder bauteilearme Ausgestaltung erzielt werden. Es kann insbesondere eine fehlerhafte Auswertung, welche insbesondere auf Übertragungsfehler zu der Geräte-Steuereinheit zurückzuführen ist, vermieden werden, wodurch insbesondere eine qualitativ hochwertige Auswertung und/oder ein hoher Bedienkomfort erreicht werden kann.

Beispielsweise könnte die Handgriffelektronik in dem Betriebszustand mit zumindest einer Gargeschirrbedienerschnittstelle kommunizieren und insbesondere ein Ergebnis einer Auswertung mittels der Gargeschirrbedienerschnittstelle ausgeben. Vorzugsweise ist die Handgriffelektronik zu einer Kommunikation mit zumindest einer Geräte-Steuereinheit zumindest eines Gargeräts vorgesehen. Insbesondere weist das Garsystem zumindest ein und vorteilhaft zumindest das Gargerät auf. Das Gargerät weist insbesondere zumindest eine und vorteilhaft zumindest die Geräte-Steuereinheit auf. In dem Betriebszustand kommuniziert die Handgriffelektronik insbesondere mit der Geräte-Steuereinheit des Gargeräts. Insbesondere weist die Handgriffelektronik zumindest eine Kommunikationseinheit auf. Insbesondere weist die Geräte-Steuereinheit zumindest eine Kommunikationseinheit auf. In dem Betriebszustand kommunizieren insbesondere die Kommunikationseinheit der Handgriffelektronik und die Kommunikationseinheit der Geräte-Steuereinheit miteinander. Dadurch kann insbesondere eine hohe Flexibilität und/oder ein hoher Bedienkomfort erzielt werden. Insbesondere aufgrund der Kommunikation der Handgriffelektronik und der Geräte-Steuereinheit, kann insbesondere eine hohe Transparenz von Informationen erzielt werden.

Weiterhin wird vorgeschlagen, dass der Gargeschirrhandgriff zumindest eine Antriebsschnittstelle aufweist, welche zu einem mechanischen Antrieb zumindest einer mechanischen Funktionseinheit vorgesehen ist. Insbesondere weist das Garsystem die mechanische Funktionseinheit auf. Die mechanische Funktionseinheit ist in wenigstens einem montierten Zustand insbesondere zumindest an dem Gargeschirr, insbesondere an der Gargeschirrgehäuseeinheit, und/oder vorteilhaft an dem Gargeschirrhandgriff, insbesondere an der Handgriffgehäuseeinheit, angeordnet. Beispielsweise könnte die mechanische Funktionseinheit zumindest eine Lebensmittelbehandlungseinheit aufweisen und vorteilhaft als eine Lebensmittelbehandlungseinheit ausgebildet sein. In wenigstens einem Betriebszustand könnte die mechanische Funktionseinheit insbesondere zumindest ein Lebensmittel, welches insbesondere innerhalb des Lebensmittelaufnahmeraums angeordnet sein könnte, insbesondere mechanisch, behandeln und/oder bearbeiten. Die mechanische Funktionseinheit könnte beispielsweise zu einem Verrühren und/oder zu einem Mixen und/oder zu einem Zerschneiden und/oder zu einem Zerhacken und/oder zu einem Verkneten von Lebensmitteln vorgesehen sein. Unter einer "Antriebsschnittstelle" soll insbesondere eine Schnittstelle verstanden werden, welche zu einer Übertragung zumindest einer Antriebskraft und/oder zumindest eines Antriebsmoments vorgesehen ist. Beispielsweise könnte die Antriebsschnittstelle zumindest eine mechanische Welle aufweisen und/oder insbesondere als mechanische Welle ausgebildet sein. In wenigstens einem montierten Zustand ragt die Antriebsschnittstelle insbesondere wenigstens teilweise aus der Handgriffgehäuseeinheit heraus. Insbesondere ist die Antriebsschnittstelle zu einer mechanischen Kopplung mit der mechanischen Funktionseinheit vorgesehen und treibt insbesondere in wenigstens einem Betriebszustand die mechanische Funktionseinheit über die Kopplung an. Dadurch kann insbesondere auf eine zusätzliche Antriebseinheit zu einem Antrieb der mechanischen Funktionseinheit verzichtet werden, wodurch insbesondere eine geringe Bauteilevielfalt und/oder eine geringe Lagerhaltung erzielt werden kann.

Ferner wird vorgeschlagen, dass der Gargeschirrhandgriff zumindest einen elektrischen Energiespeicher aufweist, welcher insbesondere zu einer Energieversorgung zumindest der Handgriffelektronik und/oder der Gargeschirrfunktionseinheit und/oder der Antriebsschnittstelle vorgesehen ist. Unter einem elektrischen "Energiespeicher" soll insbesondere eine elektrische Einheit verstanden werden, welche zu einer Speicherung von elektrischer Energie vorgesehen ist. Beispielsweise könnte der elektrische Energiespeicher zumindest einen Akkumulator und/oder zumindest einen Kondensator aufweisen. Der elektrische Energiespeicher könnte beispielsweise zu einer Speicherung von elektrischer Spannung vorgesehen sein. Beispielsweise könnte sich der elektrische Energiespeicher von einer Spule unterscheiden und insbesondere zu einer Speicherung von Energie in einer von elektrischem Strom verschiedenen Weise vorgesehen sein. Dadurch kann insbesondere ein zumindest weitgehend unabhängiger Betrieb von elektrischen Komponenten des Gargeschirrhandgriffs ermöglicht werden, wodurch insbesondere eine hohe Flexibilität bereitgestellt werden kann.

Zudem wird vorgeschlagen, dass der Gargeschirrhandgriff zumindest eine Kommunikationsschnittstelle aufweist, welche zu einem Empfang von Daten vorgesehen ist. Der Gargeschirrhandgriff weist insbesondere zumindest eine elektrische Einheit auf, welche insbesondere über die Kommunikationsschnittstelle zu einer Kommunikation mit zumindest einer externen elektrischen Einheit, welche beispielsweise Teil des Gargeräts sein könnte, vorgesehen ist. Die elektrische Einheit des Gargeschirrhandgriffs könnte beispielsweise die Handgriffelektronik aufweisen und/oder als die Handgriffelektronik ausgebildet sein. Dadurch kann insbesondere eine besonders vorteilhafte Konstruktion erzielt werden.

Beispielsweise könnte die Kommunikationsschnittstelle zu einem drahtlosen Empfang von Daten vorgesehen sein. Insbesondere alternativ oder zusätzlich könnte die Kommunikationsschnittstelle zu einem Empfang von Daten über zumindest ein Datenkabel vorgesehen sein. Vorzugsweise ist die Kommunikationsschnittstelle zu einem Anschluss zumindest eines Datenkabels vorgesehen. Die Kommunikationsschnittstelle weist insbesondere zumindest eine Anschlussbuchse auf, welche zu dem Anschluss des Datenkabels vorgesehen ist. Insbesondere ist in wenigstens einem Betriebszustand das Datenkabel an der Kommunikationsschnittstelle angeschlossen. In wenigstens einem Betriebszustand kommuniziert die Kommunikationseinheit insbesondere über das Datenkabel mit zumindest einer weiteren elektrischen Einheit. Die Kommunikationsschnittstelle könnte, insbesondere alternativ oder zusätzlich, zu einem Anschluss zumindest eines Kommunikationskabels, insbesondere zu einem Anschluss zumindest einer weiteren Kommunikationseinheit, beispielsweise der Geräte-Steuereinheit, und/oder zumindest eines Energieversorgungskabels, insbesondere zu einem Anschluss zumindest einer Energieversorgungseinheit, und/oder zumindest eines Bildschirmkabels, insbesondere zu einem Anschluss zumindest eines Bildschirms, und/oder zumindest eines Tastaturkabels, insbesondere zu einem Anschluss zumindest einer Tastatur, vorgesehen sein. Dadurch kann insbesondere eine sichere und/oder schnelle Datenübertragung ermöglicht werden, wodurch insbesondere ein hoher Bedienkomfort erreicht werden kann.

Insbesondere sind in dem Gargeschirrhandgriff wenigstens ein Großteil der und vorteilhaft alle der elektrischen Baueinheiten des Gargeschirrhandgriffs angeordnet. Dadurch können die elektrischen Baueinheiten insbesondere an einem sicheren Ort und/oder lösbar von dem Gargeschirr angeordnet werden, wodurch insbesondere eine einfache und/oder sichere Reinigbarkeit ermöglicht werden kann. Beispielsweise kann das Gargeschirr problemlos gereinigt werden, beispielsweise in einer Spülmaschine, und zwar insbesondere unter Vermeidung einer Gefährdung der elektrischen Baueinheiten.

Eine besonders vorteilhafte Konstruktion kann insbesondere erreicht werden durch ein Verfahren zu einer Montage eines Garsystems, insbesondere nach einem der vorhergehenden Ansprüche, welches zumindest einen Gargeschirrhandgriff aufweist, welcher zumindest eine Handgriffschnittstelle aufweist, die zu einer lösbaren mechanischen Verbindung mit zumindest einer Gargeschirrschnittstelle zumindest eines Gargeschirrs vorgesehen ist, wobei eine mechanische Kopplung der Handgriffschnittstelle und der Gargeschirrschnittstelle wenigstens abschnittsweise gleichzeitig hergestellt wird wie eine elektrische Kopplung zumindest einer elektrischen Verbindungsschnittstelle der Handgriffschnittstelle und zumindest einer elektrischen Verbindungsschnittstelle der Gargeschirrschnittstelle. Unter der Wendung, dass eine mechanische Kopplung "wenigstens abschnittsweise" gleichzeitig hergestellt wird wie eine elektrische Kopplung, soll insbesondere verstanden werden, dass die mechanische Kopplung und die elektrische Kopplung in zumindest einem Zeitabschnitt zumindest einer Kopplungszeitdauer gleichzeitig hergestellt werden und insbesondere in zumindest einem Zeitabschnitt der Kopplungszeitdauer getrennt voneinander hergestellt werden könnten. Insbesondere wird zumindest eine Verbindung, insbesondere zumindest eine Steckerverbindung hergestellt, welche, insbesondere wenigstens abschnittsweise gleichzeitig, vorteilhaft gleichzeitig, insbesondere zu einer Energieübertragung und/oder zu einer Datenübertragung vorgesehen ist. Die Verbindung, insbesondere die Steckerverbindung, unterscheidet sich insbesondere von einer reinen Kontaktierung elektrisch leitender Bauteile.

Das Garsystem soll hierbei nicht auf die oben beschriebene Anwendung und Ausführungsform beschränkt sein. Insbesondere kann das Garsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Garsystem in einer schematischen Draufsicht,
- Fig. 2: einen Ausschnitt eines Gargeschirrs und eines Gargeschirrhandgriffs des Garsystems in einem montierten Zustand in einer schematischen perspektivischen Darstellung,
- Fig. 3: den Gargeschirrhandgriff in einer schematischen perspektivischen Darstellung,
- Fig. 4: einen Ausschnitt des Gargeschirrs in einer schematischen perspektivischen Darstellung,
- Fig. 5: den Gargeschirrhandgriff in einer schematischen Schnittdarstellung,
- Fig. 6: einen Ausschnitt des Gargeschirrs in einer schematischen Schnittdarstellung und
- Fig. 7: den Gargeschirrhandgriff, ein Datenkabel des Garsystems und eine Funktionseinheit des Garsystems in einer schematischen Seitenansicht.

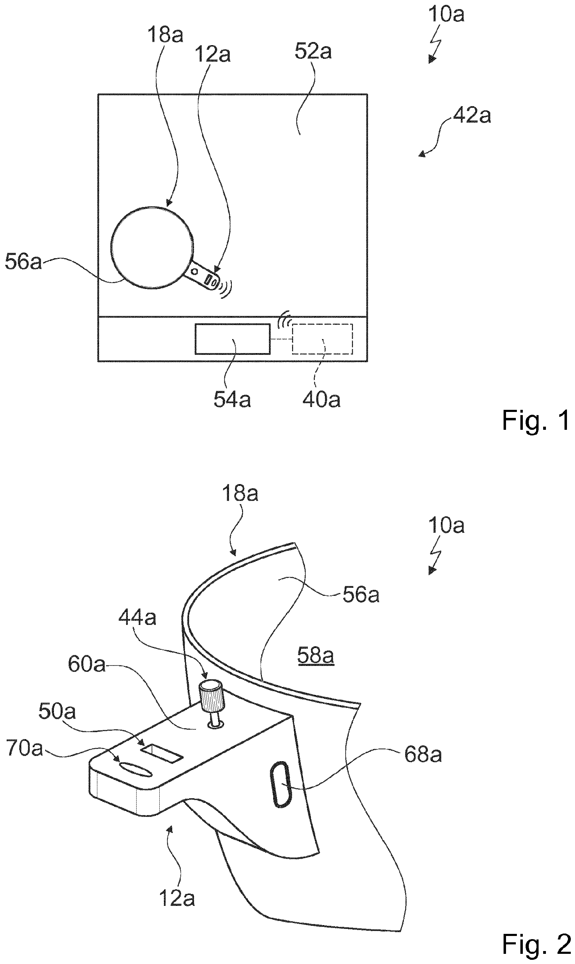

Figur 1 zeigt insbesondere ein Garsystem 10a, welches insbesondere als ein Induktionsgarsystem ausgebildet ist. Im vorliegenden Ausführungsbeispiel ist das Garsystem 10a insbesondere als ein Kochsystem, und zwar insbesondere als ein Induktionskochsystem, ausgebildet. Alternativ könnte das Garsystem 10a beispielsweise als ein Ofensystem, insbesondere als ein Induktionsofensystem, ausgebildet sein.

Das Garsystem 10a weist insbesondere zumindest ein und vorteilhaft genau ein Gargerät 42a auf. Das Gargerät 42a ist insbesondere als ein Induktionsgargerät ausgebildet. Das Gargerät 42a könnte beispielsweise als ein Ofen, und zwar insbesondere als ein Induktionsofen, ausgebildet sein. Im vorliegenden Ausführungsbeispiel ist das Gargerät 42a insbesondere als ein Kochfeld, und zwar insbesondere als ein Induktionskochfeld, ausgebildet. Das Gargerät 42a ist insbesondere speziell für das Garsystem 10a ausgebildet und/oder vorgesehen.

Das Garsystem 10a weist insbesondere zumindest eine und vorteilhaft genau eine Geräteplatte 52a auf. In wenigstens einem montierten Zustand bildet die Geräteplatte 52a insbesondere eine Sichtfläche aus, welche in dem montierten Zustand insbesondere einem Bediener zugewandt angeordnet ist. Im vorliegenden Ausführungsbeispiel ist die Geräteplatte 52a als eine Aufstellplatte ausgebildet.

Die Geräteplatte 52a ist insbesondere zu einem Aufstellen von Gargeschirr 18a, insbesondere zum Zweck einer Beheizung des Gargeschirrs 18a, vorgesehen. Im vorliegenden Ausführungsbeispiel ist die Geräteplatte 52a insbesondere als eine Kochfeldplatte ausgebildet. Die Geräteplatte 52a ist insbesondere Teil des Gargeräts 42a. Das Gargerät 42a weist insbesondere die Geräteplatte 52a auf.

Beispielsweise könnte das Garsystem 10a zumindest ein und insbesondere genau ein Gargeschirr 18a, insbesondere zumindest das und vorteilhaft genau das Gargeschirr 18a, aufweisen. Das Gargeschirr 18a ist insbesondere zu einem Aufstellen auf der Geräteplatte 52a, insbesondere zum Zweck einer Beheizung des Gargeschirrs 18a, vorgesehen.

Das Garsystem 10a weist insbesondere zumindest eine Heizeinheit auf (nicht dargestellt). Im vorliegenden Ausführungsbeispiel weist das Garsystem 10a insbesondere eine Vielzahl an Heizeinheiten auf.

Alternativ könnte das Garsystem 10a beispielsweise eine kleinere Anzahl an Heizeinheiten aufweisen, wie beispielsweise genau eine Heizeinheit und/oder zumindest zwei, insbesondere zumindest vier, vorteilhaft zumindest acht, besonders vorteilhaft zumindest zwölf und vorzugsweise mehrere Heizeinheiten. Die Heizeinheiten könnten beispielsweise in Form einer Matrix angeordnet sein. Im Folgenden wird insbesondere lediglich eine der Heizeinheiten beschrieben.

Die Heizeinheit ist in einer Einbaulage insbesondere unterhalb der Geräteplatte 52a angeordnet. Die Heizeinheit ist insbesondere dazu vorgesehen, zumindest ein auf der Geräteplatte 52a oberhalb der Heizeinheit aufgestelltes Gargeschirr 18a zu erhitzen. Die Heizeinheit ist insbesondere als Induktionsheizeinheit ausgebildet. Die Heizeinheit ist insbesondere Teil des Gargeräts 42a. Das Gargerät 42a insbesondere weist die Heizeinheit auf.

Das Garsystem 10a weist insbesondere zumindest eine und vorteilhaft genau eine Geräte-Bedienerschnittstelle 54a auf (vgl. Figur 1). Die Geräte-Bedienerschnittstelle 54a ist insbesondere zu einer Eingabe und/oder Auswahl von Betriebsparametern vorgesehen, wie beispielsweise einer Heizleistung und/oder einer Heizleistungsdichte und/oder einer Heizzone. Die Geräte-Bedienerschnittstelle 54a ist insbesondere zu einer Ausgabe eines Werts eines Betriebsparameters an einen Bediener vorgesehen. Die Geräte-Bedienerschnittstelle 54a ist insbesondere Teil des Gargeräts 42a. Das Gargerät 42a insbesondere weist die Geräte-Bedienerschnittstelle 54a auf.

Das Garsystem 10a weist insbesondere zumindest eine und vorteilhaft genau eine Geräte-Steuereinheit 40a auf. In wenigstens einem Betriebszustand steuert und/oder regelt die Geräte-Steuereinheit 40a insbesondere eine Gerätehauptfunktion. Die Geräte-Steuereinheit 40a ist insbesondere dazu vorgesehen, in Abhängigkeit von mittels der Geräte-Bedienerschnittstelle 54a eingegebener Betriebsparameter, Aktionen auszuführen und/oder Einstellungen zu verändern.

Die Geräte-Steuereinheit 40a ist insbesondere wenigstens teilweise, vorteilhaft wenigstens zu einem Großteil und vorzugsweise vollständig Teil des Gargeräts 42a. Das Gargerät 42a weist insbesondere wenigstens teilweise, vorteilhaft wenigstens zu einem Großteil und vorzugsweise vollständig die Geräte-Steuereinheit 40a auf. Die Geräte-Steuereinheit 40a regelt in dem Betriebszustand insbesondere eine Energiezufuhr zu der Heizeinheit, und zwar insbesondere zu einer Beheizung des Gargeschirrs 18a.

Das Garsystem 10a weist insbesondere zumindest einen und vorteilhaft genau einen Gargeschirrhandgriff 12a auf (vgl. Figuren 1 bis 3 und 5). Der Gargeschirrhandgriff 12a ist insbesondere speziell für das Gargeschirr 18a ausgebildet und/oder vorgesehen. Insbesondere ist der Gargeschirrhandgriff 12a zu einer lösbaren mechanischen Anbringung an dem Gargeschirr 18a vorgesehen.

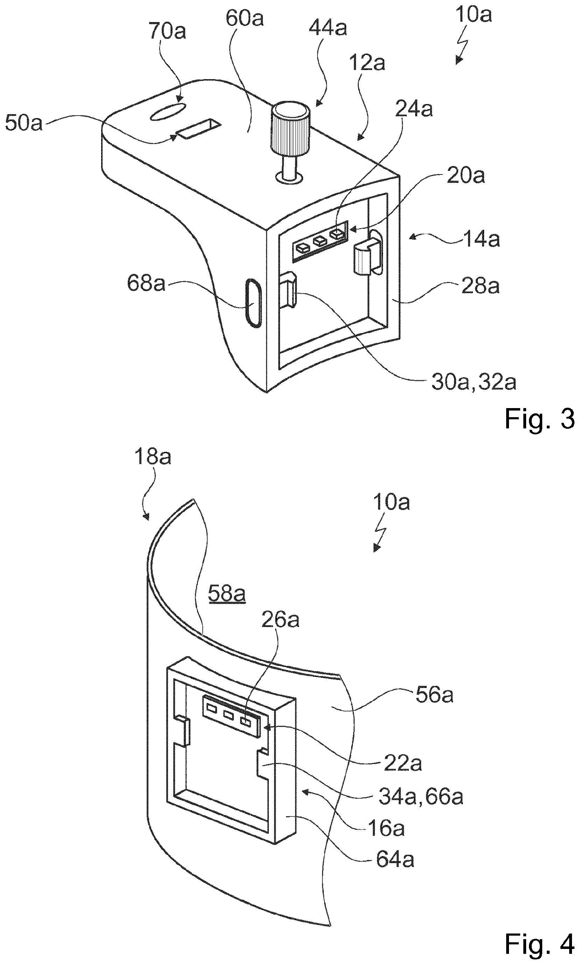

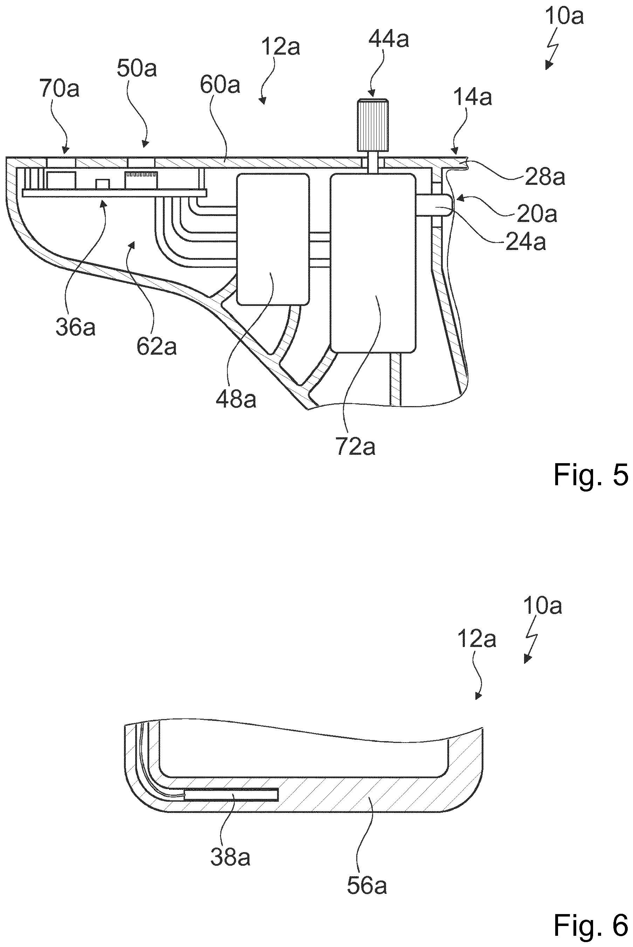

Insbesondere zu der lösbaren mechanischen Anbringung an dem Gargeschirr 18a, weist der Gargeschirrhandgriff 12a insbesondere zumindest eine Handgriffschnittstelle 14a auf (vgl. Figuren 3 und 5). Die Handgriffschnittstelle 14a ist insbesondere zu einer lösbaren mechanischen Verbindung mit zumindest einer Gargeschirrschnittstelle 16a des Gargeschirrs 18a vorgesehen. In dem montierten Zustand ist die Handgriffschnittstelle 14a insbesondere mittels der lösbaren mechanischen Verbindung mit der Gargeschirrschnittstelle 16a des Gargeschirrs 18a verbunden.

Das Gargeschirr 18a weist insbesondere zumindest eine und vorteilhaft genau eine, insbesondere zumindest die und vorteilhaft genau die, Gargeschirrschnittstelle 16a auf (vgl. Figur 4). Insbesondere weist das Gargeschirr 18a zumindest eine und vorteilhaft genau eine Gargeschirrgehäuseeinheit 56a auf. Das Gargeschirr 18a, insbesondere die Gargeschirrgehäuseeinheit 56a des Gargeschirrs 18a, begrenzt und/oder definiert zumindest einen Lebensmittelaufnahmeraum 58a. Der Lebensmittelaufnahmeraum 58a ist insbesondere zu einer Aufnahme von Lebensmitteln vorgesehen, und zwar insbesondere zum Zweck einer Garung und/oder Erhitzung und/oder Erwärmung der Lebensmittel.

Insbesondere ist die Gargeschirrschnittstelle 16a an der Gargeschirrgehäuseeinheit 56a angeordnet, und zwar auf einer dem Lebensmittelaufnahmeraum 58a abgewandten Seite. Die Gargeschirrschnittstelle 16a ist insbesondere zu einer lösbaren mechanischen Kopplung mit der Handgriffschnittstelle 14a vorgesehen, und zwar insbesondere zu einer Herstellung der lösbaren mechanischen Verbindung.

Die Handgriffschnittstelle 14a weist insbesondere zumindest eine und vorteilhaft genau eine elektrische Verbindungsschnittstelle 20a auf (vgl. Figuren 3 und 5). Die elektrische Verbindungsschnittstelle 20a der Handgriffschnittstelle 14a ist insbesondere bei der Herstellung der mechanischen Verbindung zu einer elektrischen Kopplung mit zumindest einer elektrischen Verbindungsschnittstelle 22a der Gargeschirrschnittstelle 16a vorgesehen. In dem montierten Zustand ist die elektrische Verbindungsschnittstelle 20a der Handgriffschnittstelle 14a insbesondere elektrisch mit der elektrischen Verbindungsschnittstelle 22a der Gargeschirrschnittstelle 16a gekoppelt.

Insbesondere zu einer Kopplung mit der elektrischen Verbindungsschnittstelle 20a der Handgriffschnittstelle 14a, weist die Gargeschirrschnittstelle 16a insbesondere zumindest eine und vorteilhaft genau eine, insbesondere zumindest die und vorteilhaft genau die, elektrische Verbindungsschnittstelle 22a auf (vgl. Figur 4). Die elektrische Verbindungsschnittstelle 22a der Gargeschirrschnittstelle 16a ist insbesondere zu einer elektrischen Kopplung mit der elektrischen Verbindungsschnittstelle 20a der Handgriffschnittstelle 14a vorgesehen.

Die elektrische Verbindungsschnittstelle 20a der Handgriffschnittstelle 14a weist insbesondere zumindest ein beweglich gelagertes Kontaktelement 24a auf (vgl. Figuren 3 und 5). Beispielsweise könnte die elektrische Verbindungsschnittstelle 20a der Handgriffschnittstelle 14a genau ein beweglich gelagertes Kontaktelement 24a aufweisen. Im vorliegenden Ausführungsbeispiel weist die elektrische Verbindungsschnittstelle 20a der Handgriffschnittstelle 14a zumindest zwei und vorteilhaft zumindest drei, insbesondere genau drei, beweglich gelagerte Kontaktelemente 24a auf. Von mehrfach vorhandenen Objekten ist in den Figuren jeweils lediglich eines mit einem Bezugszeichen versehen. Insbesondere alternativ oder zusätzlich, könnte die elektrische Verbindungsschnittstelle 20a der Handgriffschnittstelle 14a eine größere Anzahl an beweglich gelagerten Kontaktelementen 24a aufweisen, wie beispielsweise zumindest vier, insbesondere zumindest fünf, vorteilhaft zumindest sechs und vorzugsweise mehrere beweglich gelagerte Kontaktelemente 24a. Im Folgenden wird lediglich eines der beweglich gelagerten Kontaktelemente 24a beschrieben.

Das beweglich gelagerte Kontaktelement 24a der elektrischen Verbindungsschnittstelle 20a der Handgriffschnittstelle 14a ist insbesondere beweglich relativ zu zumindest einer Handgriffgehäuseeinheit 60a des Gargeschirrhandgriffs 12a angeordnet. In wenigstens einem demontierten Zustand ragt das beweglich gelagerte Kontaktelement 24a der elektrischen Verbindungsschnittstelle 20a der Handgriffschnittstelle 14a wenigstens abschnittsweise aus der Handgriffgehäuseeinheit 60a heraus (vgl. Figuren 3 und 5).

Insbesondere weist der Gargeschirrhandgriff 12a zumindest eine und vorteilhaft genau eine, insbesondere zumindest die und vorteilhaft genau die, Handgriffgehäuseeinheit 60a auf (vgl. Figuren 2, 3, 5 und 7). Insbesondere begrenzt und/oder definiert die Handgriffgehäuseeinheit 60a zumindest einen, insbesondere als Hohlraum ausgebildeten, Aufnahmeraum 62a, insbesondere zu einer Aufnahme und/oder zu einer Lagerung wenigstens eines Bauteils, wenigstens teilweise, vorteilhaft wenigstens zu einem Großteil und besonders vorteilhaft vollständig (vgl. Figur 5).

Das beweglich gelagerte Kontaktelement 24a der elektrischen Verbindungsschnittstelle 20a der Handgriffschnittstelle 14a ist insbesondere zu einer Kontaktierung zumindest eines Kontaktelements 26a der elektrischen Verbindungsschnittstelle 22a der Gargeschirrschnittstelle 16a vorgesehen. In dem montierten Zustand kontaktiert das beweglich gelagerte Kontaktelement 24a der elektrischen Verbindungsschnittstelle 20a der Handgriffschnittstelle 14a insbesondere das Kontaktelement 26a der elektrischen Verbindungsschnittstelle 22a der Gargeschirrschnittstelle 16a.

Insbesondere zu einer elektrischen Kopplung mit dem beweglich gelagerten Kontaktelement 24a der elektrischen Verbindungsschnittstelle 20a der Handgriffschnittstelle 14a, weist die elektrische Verbindungsschnittstelle 22a der Gargeschirrschnittstelle 16a, insbesondere pro beweglich gelagertem Kontaktelement 24a der elektrischen Verbindungsschnittstelle 20a der Handgriffschnittstelle 14a, insbesondere zumindest ein und vorteilhaft genau ein, insbesondere zumindest das und vorteilhaft genau das, Kontaktelement 26a auf (vgl. Figur 4). Insbesondere ist das Kontaktelement 26a der elektrischen Verbindungsschnittstelle 22a der Gargeschirrschnittstelle 16a zu einer elektrischen Kontaktierung mit dem beweglich gelagerten Kontaktelement 24a der elektrischen Verbindungsschnittstelle 20a der Handgriffschnittstelle 14a vorgesehen.

Das Kontaktelement 26a der elektrischen Verbindungsschnittstelle 22a der Gargeschirrschnittstelle 16a ist insbesondere als eine Kontaktfläche ausgebildet und besteht vorteilhaft wenigstens zu einem Großteil aus zumindest einem Metall.

Der Gargeschirrhandgriff 12a weist insbesondere zumindest ein und vorteilhaft genau ein Rahmenelement 28a auf (vgl. Figuren 3 und 5). Insbesondere ist das Rahmenelement 28 einstückig mit der Handgriffgehäuseeinheit 60a ausgebildet. Die Handgriffgehäuseeinheit 60a definiert und/oder bildet insbesondere das Rahmenelement 28a. Insbesondere umrahmt das Rahmenelement 28a die elektrische Verbindungsschnittstelle 20a der Handgriffschnittstelle 14a in zumindest einer Ebene wenigstens abschnittweise, insbesondere wenigstens zu einem Großteil und vorteilhaft vollständig.

Das Gargeschirr 18a weist insbesondere zumindest ein und vorteilhaft genau ein Gargeschirrrahmenelement 64a auf (vgl. Figur 4). Insbesondere ist das Gargeschirrrahmenelement 64a insbesondere zumindest an der Gargeschirrgehäuseeinheit 56a angeordnet. Insbesondere umrahmt das Gargeschirrrahmenelement 64a die elektrische Verbindungsschnittstelle 22a der Gargeschirrschnittstelle 16a in zumindest einer Ebene wenigstens abschnittweise, insbesondere wenigstens zu einem Großteil und vorteilhaft vollständig.

Beispielsweise könnte das Gargeschirrrahmenelement 64a werkzeuglos lösbar an dem Gargeschirr 18a, insbesondere an der Gargeschirrgehäuseeinheit 56a, angeordnet sein. Im vorliegenden Ausführungsbeispiel ist das Gargeschirrrahmenelement 64a insbesondere beschädigungsfrei unlösbar an dem Gargeschirr 18a, insbesondere an der Gargeschirrgehäuseeinheit 56a, angeordnet.

In dem montierten Zustand könnte beispielsweise das Gargeschirrrahmenelement 64a das Rahmenelement 28a in zumindest einer Ebene wenigstens abschnittweise, insbesondere wenigstens zu einem Großteil und vorteilhaft vollständig umgeben. Vorteilhaft umgibt das Rahmenelement 26a das Gargeschirrrahmenelement 64a in dem montierten Zustand in zumindest einer Ebene wenigstens abschnittweise, insbesondere wenigstens zu einem Großteil und vorteilhaft vollständig.

Die Handgriffschnittstelle 14a weist insbesondere zumindest ein mechanisches Verbindungselement 30a auf (vgl. Figur 3). Beispielsweise könnte die Handgriffschnittstelle 14a genau ein mechanisches Verbindungselement 30a aufweisen. Im vorliegenden Ausführungsbeispiel weist die Handgriffschnittstelle 14a zumindest zwei und vorteilhaft genau zwei mechanische Verbindungselemente 30a auf. Insbesondere alternativ oder zusätzlich, könnte die Handgriffschnittstelle 14a eine größere Anzahl an mechanischen Verbindungselementen 30a aufweisen, wie beispielsweise zumindest zwei, insbesondere zumindest drei, vorteilhaft zumindest vier, besonders vorteilhaft zumindest fünf und vorzugsweise mehrere mechanische Verbindungselemente 30a. Im Folgenden wird lediglich eines der mechanischen Verbindungselemente 30a der Handgriffschnittstelle 14a beschrieben.

Das mechanische Verbindungselement 30a der Handgriffschnittstelle 14a ist insbesondere an dem Rahmenelement 28a angeordnet, und zwar insbesondere auf einer der elektrischen Verbindungsschnittstelle 20a der Handgriffschnittstelle 14a zugewandten Seite. Insbesondere ist das mechanische Verbindungselement 30a der Handgriffschnittstelle 14a zu einer mechanischen Kopplung mit zumindest einem mechanischen Verbindungselement 66a der Gargeschirrschnittstelle 16a vorgesehen. In dem montierten Zustand ist das mechanische Verbindungselement 30a der Handgriffschnittstelle 14a insbesondere mit dem mechanischen Verbindungselement 66a der Gargeschirrschnittstelle 16a mechanisch gekoppelt.

Die Gargeschirrschnittstelle 16a weist, insbesondere pro mechanischem Verbindungselement 30a der Handgriffschnittstelle 14a, insbesondere zumindest ein und vorteilhaft genau ein mechanisches Verbindungselement 66a auf (vgl. Figur 4). Das mechanische Verbindungselement 66a der Gargeschirrschnittstelle 16a ist insbesondere an dem Gargeschirrrahmenelement 64a angeordnet, und zwar insbesondere auf einer der elektrischen Verbindungsschnittstelle 22a der Gargeschirrschnittstelle 16a zugewandten Seite.

Im vorliegenden Ausführungsbeispiel ist das mechanische Verbindungselement 30a der Handgriffschnittstelle 14a insbesondere als ein Rastelement 32a ausgebildet. Insbesondere ist das mechanische Verbindungselement 30a der Handgriffschnittstelle 14a zu der mechanischen Verbindung mit zumindest einem Rastelement 34a der Gargeschirrschnittstelle 16a vorgesehen.

Im vorliegenden Ausführungsbeispiel ist das mechanische Verbindungselement 66a der Gargeschirrschnittstelle 16a insbesondere als ein und vorteilhaft als das Rastelement 34a ausgebildet. Insbesondere ist das mechanische Verbindungselement 30a der Gargeschirrschnittstelle 16a zu der mechanischen Verbindung mit dem Rastelement 32a der Handgriffschnittstelle 14a vorgesehen.

Insbesondere zu einer Lösung der lösbaren mechanischen Verbindung, weist der Gargeschirrhandgriff 12a, insbesondere pro mechanischem Verbindungselement 30a, insbesondere zumindest ein und vorteilhaft genau ein Betätigungselement 68a auf (vgl. Figuren 2 und 3). Das Betätigungselement 68a ist insbesondere zu einer Betätigung, insbesondere durch einen Bediener, vorgesehen, und zwar insbesondere zum Zweck einer Lösung der lösbaren mechanischen Verbindung und/oder zu einer Demontage des Gargeschirrhandgriffs 12a von dem Gargeschirr 18a.

Der Gargeschirrhandgriff 12a weist insbesondere zumindest eine und vorteilhaft genau eine Handgriffelektronik 36a auf (vgl. Figur 5). Insbesondere ist die Handgriffelektronik 36a wenigstens zu einem Großteil und vorteilhaft vollständig in der Handgriffgehäuseeinheit 60a integriert. In dem Betriebszustand ist die Handgriffelektronik 14a insbesondere mittels der elektrischen Verbindungsschnittstelle 20a der Handgriffschnittstelle 14a mit zumindest einer Gargeschirrfunktionseinheit 38a verbunden (vgl. Figur 6).

Insbesondere weist das Gargeschirr 18a zumindest eine und vorteilhaft genau eine, insbesondere zumindest die und vorteilhaft genau die, Gargeschirrfunktionseinheit 38a auf. Im vorliegenden Ausführungsbeispiel weist die Gargeschirrfunktionseinheit 38a insbesondere zumindest eine Sensoreinheit auf und ist insbesondere als Sensoreinheit ausgebildet. Die Gargeschirrfunktionseinheit 38a ist insbesondere zumindest an dem Gargeschirr 38a angeordnet. Im vorliegenden Ausführungsbeispiel ist die Gargeschirrfunktionseinheit 38a insbesondere in dem Gargeschirr 18a, insbesondere in der Gargeschirrgehäuseeinheit 56a wenigstens zu einem Großteil und vorteilhaft vollständig integriert.

Insbesondere ist die Handgriffelektronik 36a zu einer Auswertung zumindest einer von der Gargeschirrfunktionseinheit 38a übermittelten Kenngröße vorgesehen. In dem Betriebszustand wertet die Handgriffelektronik 36a insbesondere zumindest eine von der Gargeschirrfunktionseinheit 38a übermittelte Kenngröße aus. Im vorliegenden Ausführungsbeispiel ist die Kenngröße insbesondere als ein zumindest einen Sensorparameter kennzeichnender Parameter ausgebildet.

Die Handgriffelektronik 36a ist insbesondere zu einer, insbesondere drahtlosen, Kommunikation mit der Geräte-Steuereinheit 40a des Gargeräts 42a vorgesehen. In dem Betriebszustand kommuniziert die Handgriffelektronik 36a insbesondere mit der Geräte-Steuereinheit 40a des Gargeräts 42a, und zwar insbesondere drahtlos.

Der Gargeschirrhandgriff 12a weist insbesondere zumindest eine und vorteilhaft genau eine Ausgabeeinheit 70a auf (vgl. Figuren 2, 3 und 5). Insbesondere ist die Ausgabeeinheit 70a zu einer Ausgabe zumindest einer Information, insbesondere an zumindest einen Bediener, und/oder zu einer Kommunikation, insbesondere mit zumindest einem Bediener, vorgesehen. In dem Betriebszustand gibt die Ausgabeeinheit 70a insbesondere zumindest eine Information, insbesondere an zumindest einen Bediener, aus und/oder kommuniziert insbesondere in dem Betriebszustand, insbesondere mit zumindest einem Bediener.

Die Ausgabeeinheit 70a gibt im vorliegenden Ausführungsbeispiel insbesondere zumindest eine Information hinsichtlich zumindest eines Zustands eines Garprozesses und/oder hinsichtlich der Kenngröße aus, welche insbesondere den Sensorparameter kennzeichnet.

Im vorliegenden Ausführungsbeispiel ist die Ausgabeeinheit 70a als eine Anzeigeeinheit ausgebildet. Beispielsweise könnte die Ausgabeeinheit 70a zumindest ein Display und/oder zumindest eine Lichtquelle und/oder zumindest ein Leuchtsymbol aufweisen. Die Lichtquelle könnte beispielsweise zumindest eine LED aufweisen und/oder als LED ausgebildet sein.

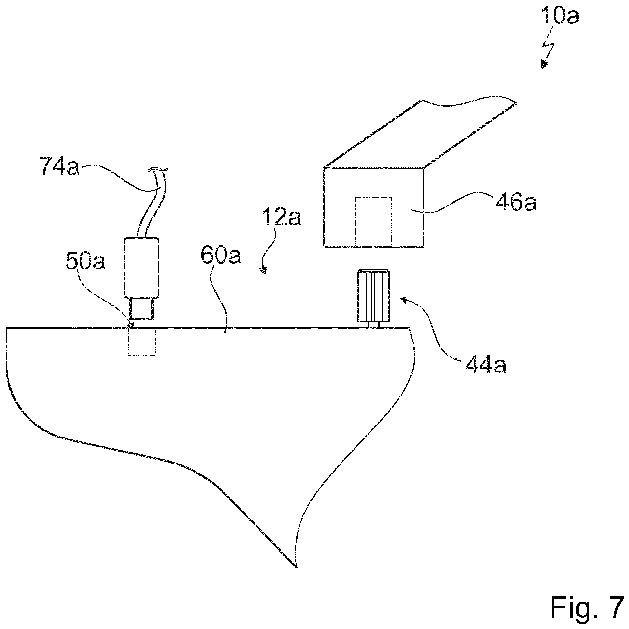

Der Gargeschirrhandgriff 12a weist insbesondere zumindest eine und vorteilhaft genau eine Antriebsschnittstelle 44a auf (vgl. Figuren 2, 3, 5 und 7). Insbesondere ist die Antriebsschnittstelle 44a zu einem mechanischen Antrieb zumindest einer mechanischen Funktionseinheit 46a vorgesehen (vgl. Figuren 7). In dem Betriebszustand treibt die Antriebsschnittstelle insbesondere die mechanische Funktionseinheit 46a an.

Das Garsystem 10a weist insbesondere zumindest eine, insbesondere zumindest die, mechanische Funktionseinheit 46a auf. Die mechanische Funktionseinheit 46a ist insbesondere zu einer Behandlung und/oder zu einer Bearbeitung von in dem Lebensmittelaufnahmeraum 58a angeordneten Lebensmitteln vorgesehen. Insbesondere ist die mechanische Funktionseinheit 46a zu einem Anschluss an die Antriebsschnittstelle 44a und/oder zu einer Kopplung mit der Antriebsschnittstelle 44a vorgesehen.

Die Antriebsschnittstelle 44a ragt insbesondere wenigstens abschnittsweise und vorteilhaft abschnittsweise aus der Handgriffgehäuseeinheit 60a heraus (vgl. Figur 5). Insbesondere weist der Gargeschirrhandgriff 12a zumindest einen und vorteilhaft genau einen Antriebsmotor 72a auf. Der Antriebsmotor treibt in dem Betriebszustand insbesondere die Antriebsschnittstelle 44a an und überträgt insbesondere zumindest ein Antriebsmoment an die Antriebsschnittstelle 44a. Im vorliegenden Ausführungsbeispiel ist der Antriebsmotor 72a insbesondere als ein Elektromotor ausgebildet.

Der Gargeschirrhandgriff 12a weist insbesondere zumindest einen und vorteilhaft genau einen Energiespeicher 48a auf (vgl. Figur 5). Der Energiespeicher 48a ist insbesondere zu einer Speicherung von Energie vorgesehen. Im vorliegenden Ausführungsbeispiel weist der Energiespeicher 48a insbesondere zumindest einen Akkumulator auf und ist insbesondere als Akkumulator ausgebildet. In dem Betriebszustand versorgt der Energiespeicher insbesondere zumindest ein elektrisches Objekt, vorteilhaft wenigstens einen Teil der elektrischen Objekte, besonders vorteilhaft wenigstens einen Großteil der elektrischen Objekte und vorzugsweise jedes der elektrischen Objekte mit elektrischer Energie.

Das elektrische Objekt und/oder die elektrischen Objekte könnte/könnten beispielsweise der Antriebsmotor 72a und/oder die Handgriffelektronik 36a und/oder die Ausgabeeinheit 70a und/oder die Gargeschirrfunktionseinheit 38a sein. Insbesondere könnte/könnten das elektrische Objekt und/oder die elektrischen Objekte Teil des Gargeschirrhandgriffs 12a und/oder des Gargeschirrs 18a sein.

Der Gargeschirrhandgriff 12a weist insbesondere zumindest eine und vorteilhaft genau eine Kommunikationsschnittstelle 50a auf (vgl. Figuren 2, 3 und 5). Insbesondere ist die Kommunikationsschnittstelle 50a zu einem Empfang von Daten vorgesehen. In dem Betriebszustand empfängt die Kommunikationsschnittstelle 50a insbesondere Daten.

Beispielsweise könnte die Kommunikationsschnittstelle 50a Daten drahtlos empfangen. Vorteilhaft ist die Kommunikationsschnittstelle 50a zu einem Anschluss zumindest eines Datenkabels 74a vorgesehen (vgl. Figur 7). Insbesondere empfängt die Kommunikationsschnittstelle 50a in dem Betriebszustand Daten über das Datenkabel 74a.

In dem Betriebszustand empfängt die Kommunikationsschnittstelle 50a insbesondere elektrische Energie über das Datenkabel 74a. Die Kommunikationsschnittstelle 50a leitet die elektrische Energie insbesondere an den Energiespeicher 48a weiter, und zwar insbesondere zu einem Aufladen des Energiespeichers 48a mit elektrischer Energie. Insbesondere alternativ oder zusätzlich, könnte der Gargeschirrhandgriff 12a insbesondere zu einem Aufladen des Energiespeichers 48a von dem Gargeschirr 18a entfernt und/oder gelöst werden. Ein Aufladen des Energiespeichers 48a könnte beispielsweise in einem von dem Gargeschirr 18a entfernten und/oder gelösten Zustand erfolgen.

In einem Verfahren zu einer Montage des Garsystems 10a wird eine mechanische Kopplung der Handgriffschnittstelle 14a und der Gargeschirrschnittstelle 16a wenigstens abschnittsweise gleichzeitig hergestellt wie eine elektrische Kopplung der elektrischen Verbindungsschnittstelle 20a der Handgriffschnittstelle 14a und der elektrischen Verbindungsschnittstelle 22a der Gargeschirrschnittstelle 16a.

### Bezugszeichen

- 10: Garsystem
- 12: Gargeschirrhandgriff
- 14: Handgriffschnittstelle
- 16: Gargeschirrschnittstelle
- 18: Gargeschirr
- 20: Elektrische Verbindungsschnittstelle
- 22: Elektrische Verbindungsschnittstelle
- 24: Kontaktelement
- 26: Kontaktelement
- 28: Rahmenelement
- 30: Mechanisches Verbindungselement
- 32: Rastelement
- 34: Rastelement
- 36: Handgriffelektronik
- 38: Gargeschirrfunktionseinheit
- 40: Geräte-Steuereinheit
- 42: Gargerät
- 44: Antriebsschnittstelle
- 46: Mechanische Funktionseinheit
- 48: Energiespeicher
- 50: Kommunikationsschnittstelle
- 52: Geräteplatte
- 54: Geräte-Bedienerschnittstelle
- 56: Gargeschirrgehäuseeinheit
- 58: Lebensmittelaufnahmeraum
- 60: Handgriffgehäuseeinheit
- 62: Aufnahmeraum
- 64: Gargeschirrrahmenelement
- 66: Mechanisches Verbindungselement
- 68: Betätigungselement
- 70: Ausgabeeinheit
- 72: Antriebsmotor
- 74: Datenkabel

## Patentansprüche

1. Garsystem, insbesondere Induktionsgarsystem, mit zumindest einem Gargeschirrhandgriff (12a), welcher zumindest eine Handgriffschnittstelle (14a) aufweist, die zu einer lösbaren mechanischen Verbindung mit zumindest einer Gargeschirrschnittstelle (16a) zumindest eines Gargeschirrs (18a) vorgesehen ist, **dadurch gekennzeichnet, dass** die Handgriffschnittstelle (14a) zumindest eine elektrische Verbindungsschnittstelle (20a) aufweist, welche bei der Herstellung der mechanischen Verbindung zu einer elektrischen Kopplung mit zumindest einer elektrischen Verbindungsschnittstelle (22a) der Gargeschirrschnittstelle (16a) vorgesehen ist.

2. Garsystem nach Anspruch 1, **dadurch gekennzeichnet, dass** die elektrische Verbindungsschnittstelle (20a) der Handgriffschnittstelle (14a) zumindest ein beweglich gelagertes Kontaktelement (24a) aufweist, welches zu einer Kontaktierung zumindest eines Kontaktelements (26a) der elektrischen Verbindungsschnittstelle (22a) der Gargeschirrschnittstelle (16a) vorgesehen ist.

3. Garsystem nach Anspruch 1 oder 2, **dadurch gekennzeichnet, dass** der Gargeschirrhandgriff (12a) zumindest ein Rahmenelement (28a) aufweist, welches die elektrische Verbindungsschnittstelle (20a) der Handgriffschnittstelle (14a) in zumindest einer Ebene wenigstens abschnittweise umrahmt.

4. Garsystem nach Anspruch 3, **dadurch gekennzeichnet, dass** die Handgriffschnittstelle (14a) zumindest ein mechanisches Verbindungselement (30a) aufweist, welches an dem Rahmenelement (28a) angeordnet ist.

5. Garsystem nach einem der vorhergehenden Ansprüche, **dadurch gekennzeichnet, dass** die Handgriffschnittstelle (14a) zumindest ein mechanisches Verbindungselement (30a) aufweist, welches als Rastelement (32a) ausgebildet ist und zu der mechanischen Verbindung mit zumindest einem Rastelement (28a) der Gargeschirrschnittstelle (16a) vorgesehen ist.

6. Garsystem nach einem der vorhergehenden Ansprüche, **dadurch gekennzeichnet, dass** der Gargeschirrhandgriff (12a) zumindest eine Handgriffelektronik (36a) aufweist, welche dazu vorgesehen ist, in wenigstens einem Betriebszustand mittels der elektrischen Verbindungsschnittstelle (20a) der Handgriffschnittstelle (14a) mit zumindest einer Gargeschirrfunktionseinheit (38a) verbunden zu sein, welche zumindest an dem Gargeschirr (18a) angeordnet ist.

7. Garsystem nach Anspruch 6, **dadurch gekennzeichnet, dass** die Handgriffelektronik (36a) zu einer Auswertung zumindest einer von der Gargeschirrfunktionseinheit (38a) übermittelten Kenngröße vorgesehen ist.

8. Garsystem nach Anspruch 6 oder 7, **dadurch gekennzeichnet, dass** die Handgriffelektronik (36a) zu einer Kommunikation mit zumindest einer Geräte-Steuereinheit (40a) zumindest eines Gargeräts (42a) vorgesehen ist.

9. Garsystem nach einem der vorhergehenden Ansprüche, **dadurch gekennzeichnet, dass** der Gargeschirrhandgriff (12a) zumindest eine Antriebsschnittstelle (44a) aufweist, welche zu einem mechanischen Antrieb zumindest einer mechanischen Funktionseinheit (46a) vorgesehen ist.

10. Garsystem nach einem der vorhergehenden Ansprüche, **dadurch gekennzeichnet, dass** der Gargeschirrhandgriff (12a) zumindest einen elektrischen Energiespeicher (48a) aufweist.

11. Garsystem nach einem der vorhergehenden Ansprüche, **dadurch gekennzeichnet, dass** der Gargeschirrhandgriff (12a) zumindest eine Kommunikationsschnittstelle (50a) aufweist, welche zu einem Empfang von Daten vorgesehen ist.

12. Garsystem nach Anspruch 11, **dadurch gekennzeichnet, dass** die Kommunikationsschnittstelle (50a) zu einem Anschluss zumindest eines Datenkabels (74a) vorgesehen ist.

13. Verfahren zu einer Montage eines Garsystems (10a), insbesondere nach einem der vorhergehenden Ansprüche, welches zumindest einen Gargeschirrhandgriff (12a) aufweist, welcher zumindest eine Handgriffschnittstelle (14a) aufweist, die zu einer lösbaren mechanischen Verbindung mit zumindest einer Gargeschirrschnittstelle (16a) zumindest eines Gargeschirrs (18a) vorgesehen ist, **dadurch gekennzeichnet, dass** eine mechanische Kopplung der Handgriffschnittstelle (14a) und der Gargeschirrschnittstelle (16a) wenigstens abschnittsweise gleichzeitig hergestellt wird wie eine elektrische Kopplung zumindest einer elektrischen Verbindungsschnittstelle (20a) der Handgriffschnittstelle (14a) und zumindest einer elektrischen Verbindungsschnittstelle (22a) der Gargeschirrschnittstelle (16a).
